# EUROPÄISCHE PATENTSCHRIFT

(11) **EP 2 315 698 B1**
(45) Veröffentlichungstag und Bekanntmachung des Hinweises auf die Patenterteilung: **04.04.2012**
(21) Anmeldenummer: 09781942.9
(22) Anmeldetag: 18.08.2009
(51) Int. Cl.: B64C 1/26

(54) **ANBINDUNG EINER TRAGFLÄCHE AN EINE RUMPFZELLE EINES FLUGZEUGS**
CONNECTION OF A WING TO A FUSELAGE OF AN AIRPLANE
RACCORDEMENT D'UNE AILE AU FUSELAGE D'UN AVION

(30) Priorität: 18.08.2008 DE 102008041317; 18.08.2008 US 189361
(43) Veröffentlichungstag der Anmeldung: 04.05.2011
(73) Patentinhaber: Airbus Operations GmbH, 21129 Hamburg (DE)
(72) Erfinder: WERTH, Frank, 28816 Stuhr (DE); POPPE, Andreas, 27367 Reeßum (DE); BENTHIEN, Hermann, 27367 Sottrum (DE); BESCHORNER, Bernd, 28844 Weyhe (DE)
(74) Vertreter: Peckmann, Ralf
(86) Internationale Anmeldenummer: PCT/EP2009/060660
(87) Internationale Veröffentlichungsnummer: WO 2010/020632

(56) Entgegenhaltungen:
- DE-A1- 19 719 915
- DE-A1-102006 051 572
- NIU MICHAEL C Y: "Airframe Structural Design, 2nd Edition, ISBN 962-7128-09-0, PASSAGE" AIRFRAME STRUCTURAL DESIGN, CONMILIT PRESS, HONG KONG, HK, 1. Februar 2002 (2002-02-01), Seiten 408-409, XP002462359

## Beschreibung

Die Erfindung betrifft eine Anbindung einer Tragfläche an eine Rumpfzelle eines Flugzeugs, insbesondere eines Hochdeckers, mit einer Vielzahl von Kopplungsgliedern, sowie ein Verfahren zum Konstruieren einer derartigen Anbindung.

Der Anschluss einer Tragfläche an die Rumpfzelle eines Flugzeugs, insbesondere an die eines Hochdeckers, muss einer großen Anzahl von konstruktiven Randbedingungen genügen, kann im Ergebnis aber immer einen Kompromiss darstellen. Denn je höher beispielsweise die Tragfläche auf dem Rumpf positioniert wird, desto mehr Raum steht zwischen den Triebwerken, den Tragflächenverkleidungen und der Bodenfläche zur Verfügung. Um die Tragfläche in ihrer strukturellen Funktion nicht zu beeinträchtigen, wird insbesondere eine Oberschale der Rumpfzelle in einem Anschlussbereich unter Bildung einer Rumpfzellenausnehmung in der Regel aufgetrennt. Im Bereich der Rumpfzellenausnehmung erfolgt der Anschluss der Tragfläche an die Rumpfzelle mittels einer Vielzahl von Kopplungsgliedern, so dass die Rumpfzelle letztendlich an der Tragfläche aufgehängt wird. Ein solcher Tragflächenanschluβ ist aus DE 102006051572 bekannt.
Je niedriger die Tragfläche in Bezug auf die Rumpfzelle angebracht wird, desto größer fällt die zwangsläufig hierfür erforderliche Rumpfzellenausnehmung aus, wodurch die statischen Eigenschaften der Rumpfzelle nachteilig beeinflusst werden. Insbesondere weist eine niedrigere Positionierung der Tragfläche den Nachteil auf, dass die sich hierdurch ergebende großflächigere Rumpfzellenausnehmung konstruktiv aufwändiger zu verschließen ist. Das Wiederverschließen ist jedoch unumgänglich, da die Rumpfzelle unter anderem einen im Vergleich zum Umgebungsluftdruck bei großen Flughöhen stark erhöhten Differenzdruck (Innendruck), der in etwa einer Höhe von 2.000 m bis 12.000 m über dem Meeresspiegel entspricht, sowie die im allgemeinen Flugbetrieb auftretenden Lande- und Manöverlasten sicher aufnehmen muss.

Ein Tragflächenanschluss hat im Flugbetrieb ein breites Spektrum unterschiedlichster Lasten zu transferieren. Lasten in der Flugrichtung entstehen vor allem durch die Beschleunigung und Verzögerung des Flugzeugs sowie in verstärktem Maße in extremen Flugsituationen oder Zulassungsvorschriften, wie zum Beispiel im so genannten "Crashfall". In einer solchen Crashsituation werden Beschleunigungen von bis zu 9 g in Flugrichtung angenommen, so dass die mechanische Belastbarkeit des Tragflächenanschlusses im Hinblick auf die Crashlasten um einen Faktor von bis zu drei höher ausgelegt werden muss, als es die im normalen Flugbetrieb auftretenden Lasten eigentlich erfordern, wodurch sich ein erhebliches Mehrgewicht ergibt. Mit Blick auf die für die Dimensionierung maßgeblichen Lasten müssen vor allem Kopplungselemente zur Aufnahme der Lasten in der Flugrichtung sehr massiv und damit schwer ausgelegt werden.

Darüber hinaus muss ein Tragflächenanschluss im Allgemeinen redundant ausgebildet sein, das heißt beim Versagen eines einzelnen Kopplungsgliedes darf es in keinem Fall zu einer vollständigen oder zumindest teilweisen Ablösung der Tragfläche von der Rumpfzelle kommen.

Bekannte Ausführungsformen von Tragflächenanschlüssen verfügen in der Regel über eine Mehrzahl, insbesondere bis zu 32 Kopplungsglieder, die jeweils speziell für eine Lastrichtung, das heißt zur Ableitung von mechanischen Belastungen parallel zur x-Achse (Flugzeuglängsachse), y-Achse (Flugzeugquerachse), sowie der z-Achse (Flugzeughochachse), ausgestaltet sind. Um die nach Maßgabe der allgemeinen Designkriterien in der Regel erforderliche Redundanz bzw. Ausfallsicherheit zu erreichen, ist jedes dieser Kopplungsglieder zusätzlich mindestens zweifach vorhanden.

Aufgabe der Erfindung ist es, einen Tragflächenanschluss für ein Flugzeug, insbesondere einen Hochdecker bzw. Schulterdecker, zu schaffen, der im Vergleich zu den vorbekannten Ausführungsformen eine signifikante Gewichtsreduzierung erlaubt.

Diese Aufgabe wird durch eine Vorrichtung mit den Merkmalen des Patentanspruchs 1 gelöst.

Dadurch, dass im Bereich von zwei Längskanten einer Rumpfzellenausnehmung jeweils mindestens zwei im Wesentlichen parallel zu einer Hochachse des Flugzeugs verlaufende z-Kopplungsglieder und jeweils mindestens zwei xz-Kopplungsglieder angeordnet sind, ergibt sich eine erhebliche Gewichtseinsparung im Vergleich zu konventionellen Ausführungsformen von Tragflächenanschlüssen. Diese Gewichtsreduzierung wird erfindungsgemäß unter anderem durch eine verminderte Anzahl von Kopplungsgliedern erzielt, die sich wiederum aus dem Vorhandensein von beispielsweise nur noch vier xz-Kopplungsgliedern ergibt, die jeweils für ein erstes Belastungsmaximum einer Belastung im Crashfall und einer Belastung im normalen Flugbetrieb parallel zu einer Längsachse (x) des Flugzeugs und für ein zweites Belastungsmaximum einer Belastung im Crashfall und einer Belastung im normalen Flugbetrieb parallel zur Hochachse (z) ausgelegt sind. Bei den genannten Belastungen handelt es sich z.B. um nominell festgelegte Belastungen, denen die Anbindung im Crashfall bzw. im normalen Flugbetrieb widerstehen können muss.

Dadurch, dass die beidseitig der Rumpfzellenausnehmung angeordneten jeweils zwei xz-Kopplungsglieder jeweils sowohl die im Crashfall als auch die im normalen Flugbetrieb auftretenden Lasten parallel zur x-Achse und zur z-Achse aufzunehmen in der Lage sind, können die bislang aufgrund der geforderten Ausfallsicherheit pro Längskante der Ausnehmung jeweils zweifach vorhandenen z-Kopplungsglieder und x-Kopplungsglieder durch lediglich zwei kombinierte xz-Kopplungsglieder ersetzt werden, was zu einer Gewichtsreduzierung führt. Das Gewichtseinsparungspotential resultiert unter anderem daraus, dass die bislang exklusiv für die x-Lasten und daher mit Blick auf die außerordentlich hohen Crashlasten massiv ausgeführten x-Kopplungsglieder nunmehr auch zur Übertragung der im normalen Flugbetrieb auftretenden, im Vergleich zu den Crashlasten jedoch deutlich kleineren z-Lasten mit herangezogen werden.
Diese funktionelle Integration zwischen den z-Kopplungsgliedern und den x-Kopplungsgliedern ist erfindungsgemäß ohne eine Einschränkung der Gesamtfunktionalität bzw. der Ausfallsicherheit möglich, da sich das Auftreten einer Crashsituation und der Lastfall des Versagens eines einzelnen Kopplungsgliedes des Tragflächenanschlusses unter allen denkbaren Betriebszuständen des Flugzeugs gegenseitig ausschließen.

Die xz-Kopplungsglieder können jeweils für die Belastung im normalen Flugbetrieb parallel zur Hochachse und für die Belastung im Crashfall parallel zur Längsachse ausgelegt werden. Dies ist besonders vorteilhaft, da im normalen Flugbetrieb insbesondere während des Starts, wenn typischerweise in den Tragflächen befindliche Treibstofftanks voll betankt sind und den Tragflächen eine große Masse verleihen, als auch im Flugbetrieb bei voll beladenem Flugzeugrumpf Kräfte in der z-Richtung auftreten können, die im Crashfall in z-Richtung auftretende Kräfte übersteigen.

Die xz-Kopplungsglieder sind jeweils im Wesentlichen in einem Winkel zur Flugzeuglängsachse, d.h. der x-Richtung, dessen Tangens gleich dem zweiten Belastungsmaximum dividiert durch das erste Belastungsmaximum ist. Diese Verlaufsrichtung ermöglicht es den xz-Kopplungsgliedern, bei besonders geringem Eigengewicht sowohl parallel zur Flugzeuglängsachse auftretende Kräfte als auch parallel zur Flugzeughochachse auftretende Kräfte bis zum jeweiligen Belastungsmaximum aufzunehmen.

Gemäß einer Ausgestaltung der Anbindung sind im Bereich der Längskanten der Rumpfzellenausnehmung jeweils mindestens zwei y-Kopplungsglieder im Wesentlichen parallel zu einer Querachse des Flugzeugs angeordnet.
Infolge dieser Ausgestaltung kann die erfindungsgemäße Tragflächenanbindung auch Kräfte quer zur Flugrichtung von der Tragfläche auf die Rumpfzelle übertragen.

Gemäβ der Erfindung ist vorgesehen, dass die xz-Kopplungsglieder jeweils ein an der Rumpfzelle angeordnetes Rumpfzellenlager sowie ein an der Tragfläche befestigtes Tragflächenlager umfassen, die jeweils durch zwei xz-Laschen gelenkig miteinander verbunden sind.
Infolge dieser Ausgestaltung der xz-Kopplungsglieder mit zwei Drehpunkten wird eine zumindest geringfügige parallele Verschiebbarkeit der Tragfläche in Relation zur Rumpfzelle ermöglicht. In Verbindung mit den übrigen y-Kopplungsgliedern sowie den z-Kopplungsgliedern wird dennoch eine statisch ausreichend bestimmte Verbindung zwischen der Tragfläche und der Rumpfzelle erreicht.

Gemäß einer weiteren Ausgestaltung der Anbindung sind jeweils mindestens zwei xz-Laschen im Bereich einer Längskante der Rumpfzellenausnehmung in Bezug auf eine Längsachse (x-Achse) des Flugzeugs entgegengesetzt sowie geneigt angeordnet.
Versagt beispielsweise ein z-Kopplungsglied im Bereich der vorderen Tragflächenkante, so wirken auf das dahinter liegende vordere xz-Kopplungsglied geringere Kräfte ein, als dies beim Ausfall eines z-Kopplungsgliedes im Bereich der hinteren Tragflächenkante und dem dazu gehörigen hinteren xz-Kopplungsglied der Fall wäre. Diese Asymmetrie der im Versagensfall eines z-Kopplungsgliedes auftretenden Kräfte hat ihre Ursache in einer ungleichmäßigen Masseverteilung zwischen der Tragfläche und dem Rumpf. Durch die unterschiedlich entgegen gerichtet geneigt angeordneten Verbindungslaschen der xz-Kopplungsglieder erfolgt ein Ausgleich dieser unterschiedlich großen Kräfte. Das Versagen eines z-Kopplungsgliedes oder eines anderen Kopplungsgliedes kann zum Beispiel durch Ermüdungseffekte, Korrosionsphänomene oder Beschuss hervorgerufen werden.
Durch die beiden Schnittpunkte der geneigt verlaufenden Längsachsen der jeweils zwei, beidseitig im Anschlussbereich vorgesehenen xz-Kopplungsglieder verläuft eine gedachte Hilfsgerade, deren Mittelpunkt im Idealfall in etwa mit dem gemeinsamen Schwerpunkt von angebundener Tragfläche und Rumpfzelle zusammenfällt.

Weitere vorteilhafte Ausgestaltungen der Tragflächenanbindung sind in den weiteren Patentansprüchen dargelegt.

In der Zeichnung zeigt:
- **Fig. 1**: Eine perspektivische Übersichtsdarstellung eines Rumpfzellenabschnitts mit einem darüber beabstandet eingezeichneten Teil einer Tragfläche,
- **Fig. 2**: eine Querschnittsdarstellung durch eine zusammengefügte Tragflächenanbindung,
- **Fig. 3**: eine vergrößerte isometrische Ansicht eines xz-Kopplungsgliedes aus der Fig. 2 als Teil der Tragflächenanbindung,
- **Fig. 4**: eine alternative Ausgestaltung eines xz-Kopplungsgliedes zur gewichtsoptimierten Überleitung von Crashlasten in einer Seitenansicht, und
- **Fig. 5**: eine detaillierte Draufsicht auf eine Variante einer xz-Lasche zur gewichtsoptimierten Überleitung von Crashlasten mit integrierter Schwächungszone.

In der Zeichnung weisen dieselben konstruktiven Elemente jeweils die gleiche Bezugsziffer auf.

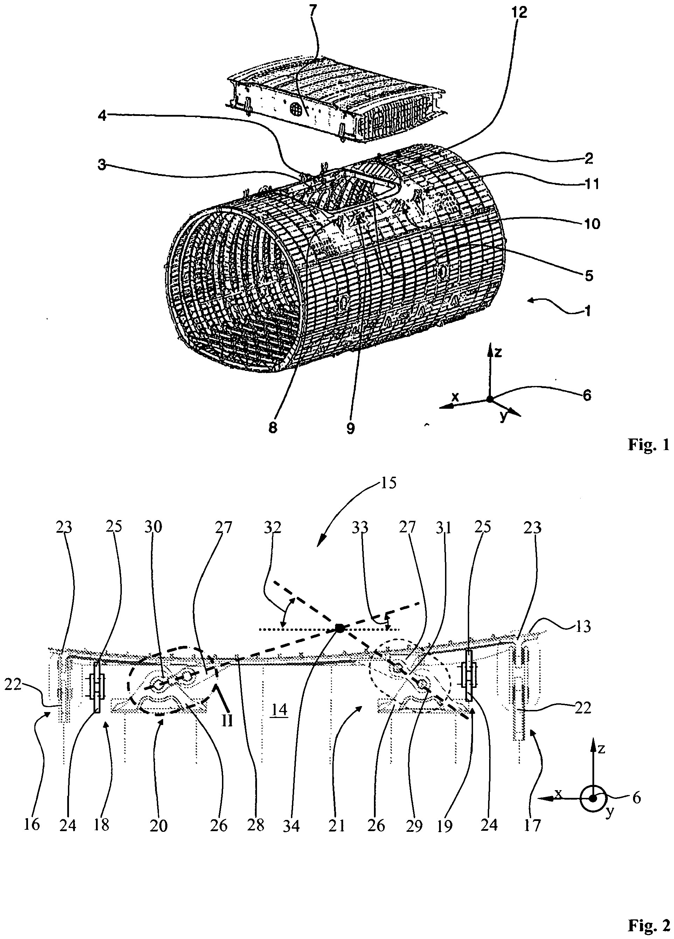

Die **Fig. 1** zeigt eine prinzipielle Übersichtsdarstellung eines Rumpfzellenabschnittes eines Hochdeckers mit einem Teil einer Tragfläche mit dazugehörigen Komponenten eines Tragflächenanschlusses.
In eine Rumpfzelle 1 eines Flugzeugs in klassischer Hockdecker- bzw. Schulterdeckbauweise ist über den Bereich einer Oberschale 2 hinaus eine in etwa rechteckförmig ausgestaltete Rumpfzellenausnehmung 3 mit zwei parallel zu einer Flugzeuglängsachse verlaufenden Längskanten 4,5 eingebracht. Ein Koordinatensystem 6 veranschaulicht die Lage aller Komponenten im Raum. Die x-Achse des Koordinatensystems 6 verläuft parallel zur Längsachse des Flugzeugs und weist in Flugrichtung. Die y-Achse bzw. die (Flugzeug-)Querachse verläuft quer zur Längsachse des Flugzeugs und ist hierbei in Flugrichtung gesehen nach links orientiert, während die z-Achse parallel zur Hochachse des Flugzeugs verläuft und von der Bodenfläche weggerichtet ist. Oberhalb der Rumpfzellenausnehmung 3 befindet sich, der besseren zeichnerischen Übersicht halber beabstandet zum Rumpfzellenabschnitt 1 dargestellt, ein mittlerer Teil der Tragfläche 7 (Tragflügelkasten) des Flugzeugs. Weiterhin sind in der Fig. 1 eine Vielzahl von Kopplungsgliedern dargestellt, von denen lediglich die im Bereich der vorderen Längskante 5 liegenden zwei z-Kopplungsglieder 8,11 sowie die beiden xz-Kopplungsglieder 9,10 repräsentativ für die übrigen, zum Teil von der Rumpfzelle 1 verdeckten Kopplungsglieder der Flügelanbindung, eine Bezugsziffer tragen. Die ebenfalls vorhandenen insgesamt vier y-Kopplungsglieder sind der besseren zeichnerischen Übersicht nicht dargestellt. Die Kopplungsglieder bilden in ihrer Gesamtheit eine erfindungsgemäß ausgestaltete Anbindung 12 zur Verbindung der Tragfläche 7 mit dem Rumpfzellenabschnitt 1 des in seiner vollen Länge nicht dargestellten Flugzeugs.

Die **Fig. 2** illustriert eine Querschnittsdarstellung durch eine erfindungsgemäß ausgeführte Anbindung zwischen einer Tragfläche und einer Rumpfzelle eines Flugzeugs im Bereich einer Längskante eines Rumpfzellenausschnittes.
Eine Tragfläche 13 ist oberhalb einer Rumpfzelle 14 angeordnet. Eine Anbindung 15 zwischen der Tragfläche 13 und der Rumpfzelle 14 umfasst zwei z-Kopplungsglieder 16,17, zwei y-Kopplungsglieder 18,19 sowie zwei xz-Kopplungsglieder 20,21, die jeweils bevorzugt zur Übertragung von Kräften parallel zur z-Achse, zur y-Achse sowie zur kombinierten xz-Richtung ausgelegt sind. Eine entsprechend der Anordnung der Kopplungsglieder 16 bis 21 ausgestaltete, jedoch in der Fig. 2 nicht dargestellte Gruppierung von weiteren sechs z-, y- sowie xz-Kopplungsgliedern ist im Bereich der zweiten, nicht sichtbaren Längskante der Rumpfzellenausnehmung vorgesehen.
Jedes der beiden z-Kopplungsglieder 16,17 verfügt über ein z-Rumpfzellenlager 22 sowie ein z-Tragflächenlager 23, die jeweils mit zwei, nicht bezeichneten z-Laschen und zugehörigen Bolzen gelenkig miteinander verbunden sind. Infolge der so gebildeten zwei Drehpunkte verfügt jedes z-Kopplungsglied über einen ausreichenden Freiheitsgrad, um die Entstehung von mechanischen Spannungen bei Relativbewegungen zwischen der Tragfläche 13 und der Rumpfzelle 14 zu vermeiden. Entsprechend verfügen auch die beiden y-Kopplungsglieder 18,19 jeweils über ein y-Rumpfzellenlager 24 und ein y-Tragflächenlager 25, die über jeweils zwei Laschen aneinander angelenkt sind. Dasselbe gilt für die beiden kombinierten xz-Kopplungsglieder 20,21, die jeweils ein xz-Rumpfzellenlager 26 und ein mittels zwei Laschen verbundenes xz-Tragflächenlager 27 aufweisen.
Die Rumpfzellenlager 22,24,26 sowie die Tragflächenlager 23,25,27 sind bevorzugt als Augen ausgeführt, an denen beidseitig eine Lasche mit einer jeweils endseitigen Bohrung anliegt. Die Verbindung zwischen den Laschen sowie den Augen in den rumpfzellenseitigen und tragflächenseitigen Lagern erfolgt jeweils durch zwei Bolzen pro Kopplungsglied 16 bis 21. Andere konstruktive Ausführungsformen der Rumpfzellenlager 22,24,26 sowie der Tragflächenlager 23,25,27 als Teil der Kopplungsglieder sind möglich.

Beide Längsachsen 28,29 der xz-Laschen 30,31 verlaufen entgegengesetzt geneigt und mit unterschiedlich großen Winkeln 32,33 bzw. Neigungen in Bezug zur Horizontalen, das heißt in Relation zur x-Achse des Koordinatensystems 6.

Infolge der unterschiedlich großen Neigung der Längsachsen 28,29 wird dem Umstand Rechnung getragen, dass im normalen Flugbetrieb sowie im Versagensfall von beispielsweise einem der beiden äußeren z-Kopplungsglieder 16,17 unterschiedlich große mechanische Kräfte auf die beiden xz-Kopplungsglieder 20,21 einwirken. Aufgrund der unterschiedlichen Neigung der Längsachsen 28,29 und unterschiedlicher Beabstandungen zwischen den xz-Kopplungsgliedern 20,21 und den z-Kopplungsgliedern 16,17 ergeben sich verschiedene Hebelwirkungen, die diese voneinander differierenden Kraftwirkungen kompensieren. Je größer hierbei die Winkel 32,33 der Längsachsen 28,29 gewählt werden, desto größer wird jeweils eine z-Komponente einer auf das betreffende xz-Kopplungsglied 20,21 wirkenden Gesamtkraft, während umgekehrt die x-Komponente der Gesamtkraft reduziert wird. Durch einen Schnittpunkt 34 zwischen den beiden Längsachsen 28,29 und einen weiteren in der Fig. 2 nicht dargestellten Längsachsenschnittpunkt der beiden anderen, senkrecht hinter der Zeichenebene versetzt liegenden xz-Kopplungsglieder der Anbindung 15 verläuft parallel zur y-Achse (senkrecht zur Zeichenebene) eine fiktive Gerade, deren Mittelpunkt in etwa mit einem gemeinsamen Schwerpunkt bzw. Kräftegleichgewicht der Tragfläche 13 und der Rumpfzelle 14 zusammenfällt. Dieser Mittelpunkt kann oberhalb der Rumpfzelle 14 im Bereich der Tragfläche 13 oder unterhalb der Tragfläche 13 im Bereich der Rumpfzelle 14 liegen.

Bei der Konstruktion der gezeigten Tragflächenanbindung werden z.B. für jede der xz-Laschen 30,31 die im Crashfall in x-Richtung auftretende nominale Belastung, die im Crashfall in z-Richtung auftretende nominale Belastung, die im normalen Flug- und Landebetrieb in x-Richtung auftretende nominale Belastung und die im normalen Flug- und Landebetrieb in z-Richtung auftretende nominale Belastung ermittelt. Anschließend wird, ebenfalls für jede der xz-Laschen 30,31 ein zugehöriges erstes, vertikales Belastungsmaximum in x-Richtung aus der im Crashfall in x-Richtung auftretenden nominale Belastung und der im normalen Flug- und Landebetrieb in x-Richtung auftretenden nominale Belastung bestimmt, indem der größere der beiden Werte ausgewählt wird. Ebenso wird für jede der xz-Laschen 30,31 ein zugehöriges zweites, horizontales Belastungsmaximum in z-Richtung aus der im Crashfall in z-Richtung auftretenden nominale Belastung und der im normalen Flug-und Landebetrieb in z-Richtung auftretenden nominale Belastung bestimmt. Im Fall eines typischen Hochdeckers wird z.B. als erstes Belastungsmaximum die nominale Belastung in z-Richtung im Crashfall und als zweites Belastungsmaximum die nominale Belastung in x-Richtung im normalen Flug- und Landebetrieb ermittelt.

Anschließend wird für jede xz-Lasche 30,31 der zugehörige Winkel 32,33 der Verlaufsrichtung als Arcustangens eines Quotienten ermittelt, der sich durch Division des zugehörigen vertikalen Belastungsmaximums durch das horizontales Belastungsmaximum am gleichen Ort ergibt. Jede xz-Lasche 30,31 wird mit einer solchen Stärke ausgelegt, dass sie einerseits in x-Richtung bis zum ersten Belastungsmaximum belastbar, und andererseits in z-Richtung bis zum zweiten Belastungsmaximum belastbar ist.

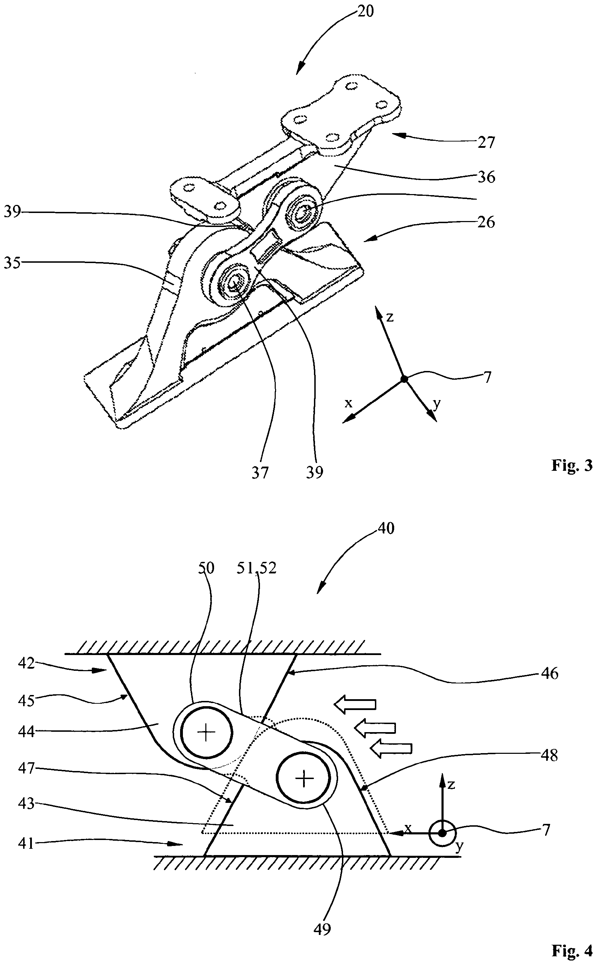

Die **Fig. 3** illustriert eine isometrische Ansicht eines xz-Kopplungsgliedes aus Fig. 2 der Tragflächenanbindung.
Das xz-Kopplungsglied 20 umfasst unter anderem das xz-Rumpfzellenlager 26 und das xz-Tragflächenlager 27 (vgl. insb. Fig. 2). Sowohl das xz-Rumpfzellenlager 26 als auch das xz-Tragflächenlager 27 weisen jeweils mindestens einen nicht bezeichneten horizontalen, das heißt parallel zur xy-Ebene des Koordinatensystems 6 liegenden Flanschabschnitt auf, durch den die mechanische Verbindung mit der Rumpfzelle bzw. der Tragfläche erfolgt. Diese mechanische Verbindung kann beispielsweise durch herkömmliche Schraub- und/oder Nietverbindungen erfolgen. Das xz-Rumpfzellenlager 26 und das xz-Tragflächenlager 27 sind im dargestellten Ausführungsbeispiel jeweils als ein Auge 35,36 mit einer nicht näher bezeichneten Bohrung ausgebildet, wobei durch die Bohrung jeweils ein Bolzen 37,38 geführt ist. Auf der Vorderseite ist die Lasche 30 auf den Bolzen 37,38 angeordnet, während rückseitig eine nahezu vollständig verdeckte, zweite Lasche 39 die beiden Bolzen 37,38 gelenkig verbindet. Infolge der beidseitig an den Augen 35,36 anliegenden Laschen 30,39 ist ein symmetrischer Kraftübergang innerhalb des Kopplungsgliedes 20 gegeben.

Der grundsätzliche Aufbau der z-Kopplungsglieder und der y-Kopplungsglieder mit jeweils einem rumpfzellenseitigen und einem tragflächenseitigen augenförmigen Lager, die jeweils mit zwei Laschen sowie zwei Bolzen gelenkig zur Schaffung des eigentlichen Kopplungsgliedes miteinander verbunden sind, folgt dem anhand des xz-Kopplungsgliedes beschriebenen konstruktiven Aufbau.
So umfasst ein z-Kopplungsglied ein z-Rumpfzellenlager und ein z-Tragflächenlager, die bevorzugt jeweils als ein Auge ausgestaltet sind. Durch die beiden Augen ist jeweils ein Bolzen geführt, auf denen beidseitig z-Laschen zur Schaffung einer Doppelgelenkverbindung angeordnet und gesichert sind. Die z-Laschen weisen beispielsweise eine langgestreckte ovale Gestalt auf, wobei endseitig jeweils eine Bohrung zur Aufnahme der Bolzen eingebracht ist. Das y-Kopplungsglied entspricht in seinem Aufbau dem des z-Kopplungsgliedes.

Die **Fig. 4** veranschaulicht die Ausgestaltung eines xz-Kopplungsgliedes zur gewichtsoptimierten Überleitung von Crashlasten in einer Seitenansicht. Das Koordinatensystem 6 veranschaulicht wiederum die Lage sämtlicher Komponenten im Raum.
Ein xz-Kopplungsglied 40 umfasst ein xz-Rumpfzellenlager 41 sowie ein xz-Tragflächenlager 42, die als Augen 43,44 ausgebildet sind. Die geometrische Gestalt des oberen Auges 43 folgt in etwa dem auf dem Kopf stehenden Großbuchstaben "A" mit zwei entgegengesetzt geneigten Seitenflächen 45,46. Entsprechend folgt die Umfangskontur des unteren Auges 44 dem lateinischen Großbuchstaben "A" in normaler Ausrichtung mit gleichfalls zwei entgegengesetzt geneigten Seitenflächen 47,48. Jedes der beiden Augen 43,44 weist eine nicht bezeichnete Bohrung auf, durch die zwei Bolzen 49,50 geführt sind. Auf beiden Seiten der Augen 43,44 sind auf den Bolzen 49,50 im Wesentlichen ovale xz-Laschen 51,52 angeordnet, um eine Doppelgelenkverbindung zwischen dem xz-Rumpfzellenlager 41 und dem xz-Tragflächenlager 42 zu schaffen. Anstelle der beschriebenen Ausführung des xz-Rumpfzellenlagers 41 sowie des xz-Tragflächenlagers 42 können alternative Konstruktionsformen Anwendung finden.

Die xz-Laschen 51,52 des xz-Kopplungsgliedes 40 sind mechanisch schwächer dimensioniert, so dass in einem Crashfall, bei dem insbesondere außerordentlich hohe Lasten in Richtung der x-Achse des Koordinatensystems 6 (Flugrichtung des Flugzeugs) auftreten, es zu einer energieabsorbierenden Stauchung bzw. Deformation der beiden xz-Laschen 51,52 des xz-Kopplungsgliedes 40 kommt.

Infolge der Stauchung der beiden xz-Laschen 51,52 werden die Seitenflächen 46,47 der beiden Augen 43,44 gegenseitig - wie mittels der punktiert dargestellten Umrissdarstellung des unteren Auges 43 angedeutet - in direkten mechanischen Kontakt gebracht, wobei unabhängig von der bereits an den xz-Laschen 51,52 geleisteten Verformungsarbeit die noch verbleibende Aufprallenergie vollständig vom xz-Kopplungsglied 40 aufgenommen bzw. weitergegeben wird. Die Verformung der xz-Laschen 51,52 erfolgt im Wesentlichen parallel zur y-Achse, wobei es im Crashfall zu keinem Bruch der xz-Lasche 51,52 kommt, so dass die mechanische Verbindung zwischen den Augen 43,44 bzw. den Bolzen 49,50 und somit die Funktion des Kopplungsgliedes 40 jederzeit erhalten bleibt.
Infolge der statisch leichteren Auslegung der xz-Laschen 51,52 sowie der Bolzen 49,50 kann eine weitere Gewichtsreduzierung erzielt werden. Weiterhin ist es möglich, die Oberflächengeometrie der beiden Seitenflächen 46,47 komplementär zueinander auszubilden, so dass sich im Crashfall ein zumindest bereichsweiser Formschluss zwischen den Augen 43,44 einstellt. Hierdurch wird ein unkontrolliertes Verschieben der Augen 43,44 in Relation zueinander verhindert. Zu diesem Zweck können die Seitenflächen 46,47 beispielsweise jeweils mit einer Verzahnung versehen werden, die im Crashfall, das heißt für den Fall, dass die Seitenflächen 46,47 infolge der starken Deformation der xz-Laschen 51,52 in einen unmittelbaren mechanischen Kontakt zueinander treten, zumindest bereichsweise ineinandergreifen.
Darüber hinaus hat diese Ausgestaltung des xz-Kopplungsgliedes 40 den Vorteil, dass keine abrupte Energieabsorption in einem Crashfall erfolgt. In Folge der anfänglichen Stauchung der xz-Laschen 51,52 wird zunächst ein Teil der im Crashfall anstehenden kinetischen Energie mit einer durch die Deformation bedingten zeitlichen Verzögerung abgebaut. Erst nachdem die Seitenflächen 46,47 in den beabsichtigten festen mechanischen Kontakt getreten sind, wird die infolge der Stauchung der xz-Laschen 51,52 bereits erheblich verminderte Aufprallenergie durch das Kopplungsglied 40 übertragen.

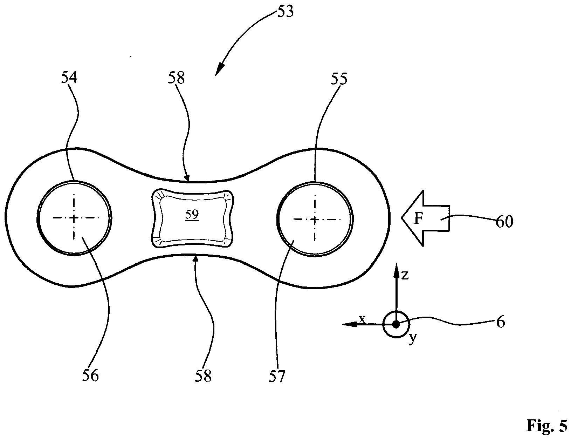

Die **Fig. 5** zeigt eine detaillierte Draufsicht auf eine abweichende Ausführungsvariante einer xz-Lasche mit einer vordefinierten Schwächungszone für ein xz-Kopplungsglied zur Absorption von Crashlasten. Das Koordinatensystem 6 dient zur Veranschaulichung der Lage der Komponenten sowie der Bewegungsrichtungen im Raum.
Eine xz-Lasche 53 weist zwei endseitig angeordnete Bohrungen 54,55 zur Aufnahme von zwei Bolzen 56,57 auf. Für jedes xz-Kopplungsglied werden zwei derartige xz-Laschen sowie zwei Bolzen 56,57 benötigt, wobei die xz-Laschen an beiden Seiten der xz-Rumpfzellenlager und xz-Tragflächenlager anliegen. Durch die beiden Bolzen 56,57 in Verbindung mit zwei xz-Laschen 53 wird eine Doppelgelenkverbindung als xz-Kopplungsglied zwischen einem nicht dargestellten xz-Rumpfzellenlager sowie einem ebenfalls nicht eingezeichneten xz-Tragflächenlager hergestellt (vgl. Fig. 2).
Eine Umfangskontur der xz-Lasche 53 folgt in etwa der eines Ovals, das jedoch beidseitig in einem mittleren Abschnitt zwischen den Bohrungen 54,55 einen Einschnürungsbereich 58 mit entgegengesetzt (spiegelbildlich) gekrümmt verlaufenden Kanten aufweist. Im Einschnürungsbereich 58 befindet sich eine Schwächungszone 59 mit einer in etwa rechteckigen Grundform, wobei jedoch die Seiten der rechteckigen Grundform jeweils zu deren Mittelpunkt hin geringfügig eingeschnürt sind. Im Bereich der Schwächungszone 59 ist die Materialstärke der bevorzugt mit einer Titanlegierung und/oder mit Titan gefertigten xz-Lasche 53 verringert, um eine definierte Stauchung der xz-Lasche 53 im Crashfall zu gewährleisten, wobei sich die xz-Lasche 53 in Richtung der y-Achse aus der Zeichenebene heraus biegen würde. Eine solche Schwächungszone 59 kann lediglich auf einer Oberseite, wie gezeigt, und/oder auf einer Unterseite der xz-Lasche 53 vorgesehen sein.
In einem Crashfall des Flugzeugs, das heißt im Fall einer plötzlich entgegen der Richtung der x-Achse des Koordinatensystems 6 wirkenden hohen Verzögerung, wirkt eine starke Kraft F in Richtung des weißen Pfeils 60 auf die xz-Lasche 53 ein. Die auftretenden Beschleunigungen von bis zu 9 g sind in der Regel um den Faktor drei höher als die im normalen Flugbetrieb entstehenden Lasten. Sowohl die Bolzen 56,57 als auch die in Fig. 5 nicht dargestellten Lager an der Rumpfzelle bzw. an der Tragfläche als Teil der Tragflächenanbindung werden im Vergleich zur ersten Ausführungsvariante der Tragflächenanbindung (vgl. Fig. 1 bis 3) so dimensioniert, dass die auftretenden Standardfluglasten - zusätzlich eines Sicherheitszuschlages - gerade noch sicher ertragen werden. Infolge dieser leichteren Auslegung der Rumpfzellenlager, der Tragflächenlager sowie der Bolzen können weitere Gewichtseinsparungen erzielt werden.
Die nach Fig. 5 abgewandelten xz-Laschen 53 müssen jedoch im Bereich des vorderen xz-Kopplungsgliedes innerhalb der Anbindung der Tragfläche eingesetzt werden (vgl. insbesondere Fig. 2, Bezugsziffer 20), da nur im Bereich dieses xz-Kopplungsgliedes Druckkräfte auftreten, um die gewünschte Stauchung der xz-Laschen zu initiieren. Im Bereich des hinteren xz-Kopplungsgliedes treten hingegen im Crashfall infolge der Verschiebung des Tragflügels nach vorne, in Flugrichtung lediglich starke Zugkräfte auf, die für den vorgesehenen Stauchungsprozess nicht nutzbar sind.
Im Crashfall kommt es im Einschnürungsbereich 58 der xz-Lasche 53 zu der exakt vordefinierten strukturellen Überlastung, in deren Folge die xz-Lasche 53 in der Darstellung der Fig. 5 aus der Zeichenebene heraus gestaucht bzw. heraus geknickt wird (parallel zur y-Achse), wobei es jedoch nicht zu einem Bruch kommt, so dass das xz-Kopplungsglied noch seine Bindungswirkung erfüllt. Nach Abschluss des Umformprozesses der xz-Lasche 53 liegt das Rumpfzellenlager zumindest bereichsweise formschlüssig am Tragflächenlager an, wobei eine beidseitige sichere Führung durch die gestauchten beiderseitig an den Lagern anliegenden xz-Laschen 53 gewährleistet ist.

### Bezugszeichenliste

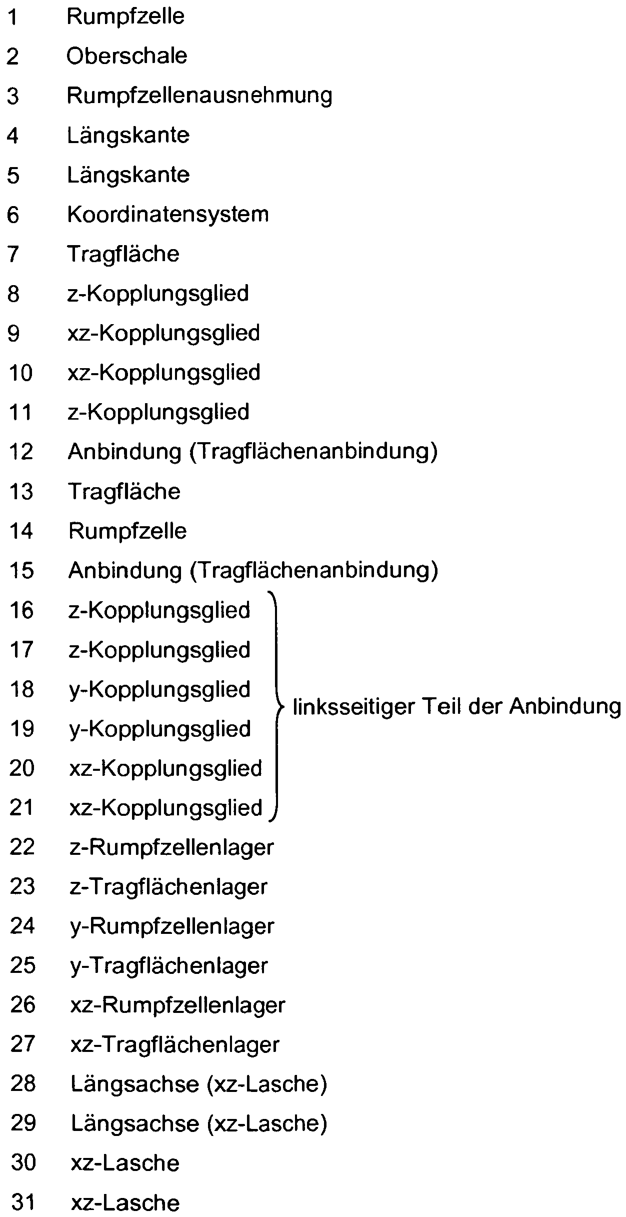

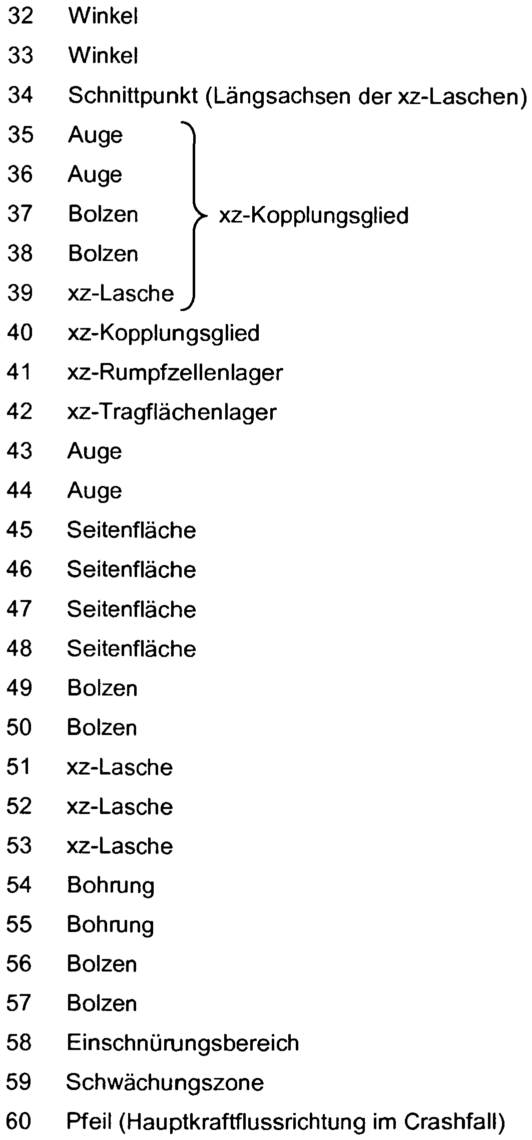

## Patentansprüche

1. Anbindung (12, 15) einer Tragfläche (7, 13) an eine Rumpfzelle (1, 14) eines Flugzeugs, insbesondere eines Hochdeckers, mit einer Vielzahl von Kopplungsgliedern (8-11, 16-21, 40),
wobei im Bereich von zwei Längskanten (4, 5) einer Rumpfzellenausnehmung (3) jeweils mindestens zwei im Wesentlichen parallel zu einer Hochachse (z) des Flugzeugs verlaufende z-Kopplungsglieder (8, 11, 16, 17) und jeweils mindestens zwei xz-Kopplungsglieder (9, 10, 20, 21, 40) angeordnet sind und
wobei die xz-Kopplungsglieder (9, 10, 20, 21, 40) jeweils ein an der Rumpfzelle (1, 14) angeordnetes xz-Rumpfzellenlager (26) und ein an der Tragfläche (7, 13) befestigtes xz-Tragflächenlager (27) umfassen, welche jeweils durch zwei in Bezug auf eine Längsachse (x) des Flugzeugs geneigte xz-Laschen (30, 31, 39, 51-53) gelenkig miteinander verbunden sind
**dadurch gekennzeichnet, dass** die xz-Laschen (51-53) mindestens eines xz-Kopplungsgliedes (40) so ausgelegt sind, dass es in einem Crashfall zu einer Energie absorbierenden Stauchung der xz-Laschen (51-53) kommt, infolge welcher eine Seitenfläche (46) des xz-Rumpfzellenlagers (26) und eine Seitenfläche (47) des xz-Tragflächenlagers (27) in direkten mechanischen Kontakt gebracht werden.

2. Anbindung (12, 15) nach Patentanspruch 1, **dadurch gekennzeichnet, dass** eine Oberflächengeometrie der Seitenflächen (46, 47) des xz-Rumpfzellenlagers (26) und des xz-Tragflächenlagers (27) komplementär zueinander ausgebildet ist.

3. Anbindung (12,15) nach Patentanspruch 2, **dadurch gekennzeichnet, dass** die Seitenflächen (46, 47) mit jeweils einer Verzahnung versehen sind, welche im Crashfall zumindest bereichsweise ineinandergreifen.

4. Anbindung (12,15) nach einem der Patentansprüche 1 bis 3, **dadurch gekennzeichnet, dass** im Bereich der Längskanten (4, 5) jeweils mindestens zwei y-Kopplungsglieder (18, 19) im Wesentlichen parallel zu einer Querachse des Flugzeugs angeordnet sind.

5. Anbindung (12, 15) nach einem der Patentansprüche 1 bis 4, **dadurch gekennzeichnet, dass** jeweils mindestens zwei xz-Laschen (30, 31, 39, 51-53) im Bereich einer Längskante (4, 5) in Bezug auf eine Längsachse des Flugzeugs entgegengesetzt und geneigt angeordnet sind.

6. Anbindung (12, 15) nach einem der Patentansprüche 1 bis 5, **dadurch gekennzeichnet, dass** jede xz-Lasche (30, 31, 39, 51-53) jeweils zwei Bohrungen (54, 55) für zwei Bolzen (37, 38, 49, 50, 56, 57) aufweist.

7. Anbindung (12, 15) nach einem der Patentansprüche 1 bis 6, **dadurch gekennzeichnet, dass** die z-Kopplungsglieder (8, 11, 16, 17) jeweils ein an der Rumpfzelle (1, 14) angeordnetes z-Rumpfzellenlager (22) und ein an der Tragfläche (7, 13) befestigtes z-Tragflächenlager (23) umfassen.

8. Anbindung (12, 15) nach einem der Patentansprüche 4 sowie 5 bis 7 soweit von Anspruch 4 abhängig, **dadurch gekennzeichnet, dass** die y-Kopplungsglieder (16, 17) jeweils ein an der Rumpfzelle (1, 14) angeordnetes y-Rumpfzellenlager (24) und ein an der Tragfläche befestigtes y-Tragflächenlager (25) umfassen, die jeweils durch zwei y-Laschen mit zwei Bohrungen und zwei Bolzen gelenkig verbunden sind.

9. Anbindung (12, 15) nach einem der Patentansprüche 1 bis 8, **dadurch gekennzeichnet, dass** sich Längsachsen (28, 29) von jeweils zwei xz-Laschen (30, 31, 39, 51-53) im Bereich einer Längskante (4, 5) schneiden.

10. Anbindung (12, 15) nach einem der Patentansprüche 1 bis 9, **dadurch gekennzeichnet, dass** die Kopplungsglieder (8-11, 16-21) vorzugsweise mit einer Titanlegierung und/oder mit Titan gebildet sind.

11. Anbindung (12, 15) nach einem der Patentansprüche 1 bis 10, **dadurch gekennzeichnet, dass** mindestens zwei xz-Laschen (30, 31, 39, 51, 52, 53) jeweils mindestens eine Schwächungszone (59) aufweisen, um in einem Crashfall des Flugzeugs eine definierte Verformung der xz-Lasche zu ermöglichen.

## Claims

1. Connection (12, 15) of a wing (7, 13) to the fuselage (1, 14) of an aircraft, in particular a high wing aircraft, having a plurality of coupling members (8-11, 16-21, 40), in each case at least two z-coupling members (8, 11, 16, 17), which extend substantially parallel to a vertical axis (z) of the aircraft, and in each case at least two xz-coupling members (9, 10, 20, 21, 40) being arranged in the region of two longitudinal edges (4, 5) of an opening (3) in the fuselage and
the xz-coupling members (9, 10, 20, 21, 40) each comprising an xz-fuselage bearing (26) arranged on the fuselage (1, 14) and an xz-wing bearing (27) attached to the wing (7, 13), which bearings are each connected articulatedly to one another by two xz-butt straps (30, 31, 39, 51-53) inclined relative to a longitudinal axis (x) of the aircraft,
**characterised in that** the xz-butt straps (51-53) of at least one xz-coupling member (40) are configured such that, in the event of a crash, energy-absorbing deformation of the xz-butt straps (51-53) occurs, as a result of which a side face (46) of the xz-fuselage bearing (26) and a side face (47) of the xz-wing bearing (27) are brought into direct mechanical contact.

2. Connection (12, 15) according to claim 1, **characterised in that** the surface geometries of the side faces (46, 47) of the xz-fuselage bearing (26) and of the xz-wing bearing (27) are complementary to one another.

3. Connection (12, 15) according to claim 2, **characterised in that** the side faces (46, 47) are each provided with teeth, which mate with one another at least in places in the event of a crash.

4. Connection (12, 15) according to any one of claims 1 to 3, **characterised in that** in each case at least two y-coupling members (18, 19) are arranged substantially parallel to a transverse axis of the aircraft in the region of the longitudinal edges (4, 5).

5. Connection (12, 15) according to any one of claims 1 to 4, **characterised in that** in each case at least two xz-butt straps (30, 31, 39, 51-53) are arranged opposite one another and inclined relative to a longitudinal axis of the aircraft in the region of a longitudinal edge (4, 5).

6. Connection (12, 15) according to any one of claims 1 to 5, **characterised in that** each xz-butt strap (30, 31, 39, 51-53) in each case comprises two bores (54, 55) for two bolts (37, 38, 49, 50, 56, 57).

7. Connection (12, 15) according to any one of claims 1 to 6, **characterised in that** the z-coupling members (8, 11, 16, 17) in each case comprise a z-fuselage bearing (22) arranged on the fuselage (1, 14) and a z-wing bearing (23) attached to the wing (7, 13).

8. Connection (12, 15) according to any one of claims 4 and 5 to 7 insofar as they are dependent on claim 4, **characterised in that** the y-coupling members (16, 17) in each case comprise a y-fuselage bearing (24) arranged on the fuselage (1, 14) and a y-wing bearing (25) attached to the wing, which bearings are in each case connected articulatedly by two y-butt straps with two bores and two bolts.

9. Connection (12, 15) according to any one of claims 1 to 8, **characterised in that** longitudinal axes (28, 29) of in each case two xz-butt straps (30, 31, 39, 51-53) intersect in the region of a longitudinal edge (4, 5).

10. Connection (12, 15) according to any one of claims 1 to 9, **characterised in that** the coupling members (8-11, 16-21) are preferably formed of a titanium alloy and/or titanium.

11. Connection (12, 15) according to any one of claims 1 to 10, **characterised in that** at least two xz-butt straps (30, 31, 39, 51, 52, 53) each comprise at least one weakened zone (59), to allow defined deformation of the xz-butt strap in the event of the aircraft crashing.

## Revendications

1. Système de raccordement (12, 15) d'aile (7, 13) au fuselage (1, 14) d'un avion, en particulier d'un avion à ailes surélevées, comprenant une pluralité d'éléments d'accouplement (8-11, 16-21, 40),
au moins deux éléments d'accouplement z (8, 11, 16, 17) s'étendant au moins sensiblement parallèlement à un axe vertical (z) de l'avion et au moins deux éléments d'accouplement xz (9, 10, 20, 21, 40) étant disposés dans la zone de deux bords longitudinaux (4, 5) d'un évidement (3) du fuselage, et
les éléments d'accouplement xz (9, 10, 20, 21, 40) comprenant respectivement un appui de fuselage xz (26) disposé au niveau du fuselage (1, 14) et un appui d'aile xz (27) fixé au niveau de l'aile (7, 13), qui sont raccordés entre eux avec une articulation par deux rabats xz (30, 31, 39, 51-53) inclinés par rapport à un axe longitudinal (x) de l'avion
**caractérisé par le fait que** les rabats xz (51-53) d'au moins un élément d'accouplement xz (40) sont conçus de telle sorte qu'en cas d'écrasement il se forme une compression absorbant l'énergie des rabats xz (51-53), à la suite de laquelle une surface latérale (46) de l'appui de fuselage xz (26) et une surface latérale (47) de l'appui d'aile xz (27) sont amenées en contact mécanique direct.

2. Raccordement (12, 15) selon la revendication 1, **caractérisé par le fait qu'**une géométrie de la surface des surfaces latérales (46, 47) de l'appui de fuselage xz (26) et celle de l'appui d'aile xz (27) sont formées de manière mutuellement complémentaire.

3. Raccordement (12, 15) selon la revendication 2, **caractérisé par le fait que** les surfaces latérales (46, 47), qui s'emboîtent au moins par endroits en cas d'écrasement, sont respectivement dotées d'une denture.

4. Raccordement (12, 15) selon l'une des revendications 1 à 3, **caractérisé par le fait que** dans la zone des bords longitudinaux (4, 5) respectivement au moins deux éléments d'accouplement y (18, 19) sont disposés essentiellement parallèles par rapport à un axe perpendiculaire de l'avion.

5. Raccordement (12, 15) selon l'une des revendications 1 à 4, **caractérisé par le fait que** respectivement au moins deux rabats xz (30, 31, 39, 51-53) dans la zone d'un bord longitudinal (4, 5) sont orientés de manière opposée et inclinés par rapport à un axe longitudinal de l'avion.

6. Raccordement (12, 15) selon l'une des revendications 1 à 5, **caractérisé par le fait que** chaque rabat xz (30, 31, 39, 51-53) présente respectivement deux alésages (54, 55) pour deux écrous (37, 38, 49, 50, 56, 57).

7. Raccordement (12, 15) selon l'une des revendications 1 à 6, **caractérisé par le fait que** les éléments d'accouplement z (8, 11, 16, 21, 17) comprennent respectivement un appui de fuselage z (22) disposé au niveau du fuselage (1, 14) et un appui d'aile z (23) fixé au niveau de l'aile (7, 13),

8. Raccordement (12, 15) selon l'une des revendications 4 ainsi que 5 à 7 dans la mesure où ils dépendent de la revendication 4, **caractérisé par le fait que** les éléments d'accouplement y (16, 17) comprennent respectivement un appui de fuselage y (24) disposé au niveau du fuselage (1, 14) et un appui d'aile y (25) fixé au niveau de l'aile, qui sont respectivement raccordés avec une articulation par deux rabats y avec deux alésages et deux boulons.

9. Raccordement (12, 15) selon l'une des revendications 1 à 8, **caractérisé par le fait que** les axes longitudinaux (28, 29) de deux rabats xz (30, 31, 39, 51-53) se coupent dans la zone d'un bord longitudinal (4, 5).

10. Raccordement (12, 15) selon l'une des revendications 1 à 9, **caractérisé par le fait que** les éléments d'accouplement (8-11, 16-21) sont formés préférentiellement avec un alliage de titane et/ou avec du titane.

11. Raccordement (12, 15) selon l'une des revendications 1 à 10, **caractérisé par le fait qu'**au moins deux rabats xz (30, 31, 39, 51, 52, 53) présentent respectivement au moins une zone de moindre résistance (59) pour permettre une déformation définie du rabat xz en cas d'écrasement de l'avion.
